# EUROPEAN PATENT SPECIFICATION

(11) **EP 1 306 483 B1**
(45) Date of publication and mention of the grant of the patent: **11.11.2009**
(21) Application number: 01912515.2
(22) Date of filing: 19.03.2001
(51) Int. Cl.: D06Q 1/10, B32B 15/08, D06M 11/83

(54) **GLITTERS AND CLOTH**
KLEIDUNG MIT GLITZERNDEM EFFEKT
SCINTILLANTS ET VETEMENT

(30) Priority: 02.05.2000 JP 2000133917
(43) Date of publication of application: 02.05.2003
(73) Proprietor: Myu-func. Corporation, Tokyo 107-0052 (JP); ITOCHU CORPORATION, Osaka-shi, Osaka 541-8577 (JP)
(72) Inventor: OMORI, Michiko, Ashiya-shi, Hyogo 659-0024 (JP); SHIMAZAKI, Sataro, Osaka-Shi, Osaka 544-0015 (JP)
(74) Representative: Wolff, Michael
(86) International application number: PCT/JP2001/002200
(87) International publication number: WO 2001/083880

(56) References cited:
- JP-A- 7 258 965
- JP-A- 10 037 085
- JP-A- 11 158 515
- DATABASE WPI Section Ch, Week 198615 Derwent Publications Ltd., London, GB; Class A18, AN 1986-097120 XP002276488 & JP 61 041600 A (OIKE KOGYO KK) 27 February 1986 (1986-02-27)

## Description

### FIELD OF THE INVENTION

The present invention relates to a glitter combining antibacterial property and aesthetic appreciation property, and to a cloth with the glitter concerned adhered therein.

### BACKGROUND ART

In recent years, as consumer's clean inclination increases and process of production and freshness management of meat and agricultural products, marine products, flowering plant and the like are needed, a nonwoven fabric equipped with antibacterial property is used in the field of packaging materials. And as such antibacterial nonwoven fabrics, conventionally nonwoven fabrics in which organic antibacterial agents, animal protein derived antibacterial agents, such as chitosan, vegetable antibacterial agents, such as hinokitiol, and mineral antibacterial agents, such as silver zeolite are impregnated or adhered may be mentioned.

Moreover, packaging materials made of nonwoven fabric in which ornament of metal color is given are used based on consumer's taste. And as nonwoven fabrics with ornament given that are used for such a usage, there are nonwoven fabrics adhered by a glitter equipped with aesthetic appreciation property of metallic luster, such as a glitter in which metal, such as aluminium, is vapor-deposited on a synthetic resin film, and a resultant laminated film is finely cut; a glitter in which a protective layer that protects the above-described metal vapor deposition side is prepared on a laminated film; or a glitter in which metal vapor deposition side of a laminated film and a synthetic resin film are dyed.

Furthermore, in order to improve air conditioning efficiency, heat insulation film is adhered on windshields of cars and on windowpanes of buildings and the like, and many of such heat insulation films are constituted by laminated films in which metals are vapor-deposited onto one side of a synthetic resin film and adhesive layer is prepared on the vapor-deposited metal layer.

However, in addition to a problem that although a certain conventional antibacterial nonwoven fabric has antibacterial property, antibacterial agent easily separates and falls by washing, and it had a problem that it was not provided with aesthetic appreciation property. Moreover, such an antibacterial nonwoven fabrics had a problem that they could not block or scatter harmful electric wave and electromagnetic wave.

Moreover, although conventional nonwoven fabric with ornament given therein is equipped with aesthetic appreciation property in metal color, it had problems that it did not have antibacterial property, or that handling was difficult for being easy to adhere to an undesirable place by static electricity charging because of aluminium and the like used therein.

Furthermore, although conventional heat insulation films were equipped with outstanding insulation property of heat, it had problems that they could not be used for textiles, such as garments, by reasons of shapes, stiffness and weight.

Then, the present invention aims at providing a glitter that provides antibacterial property, insulation of electromagnetic wave, aesthetic appreciation property in metal color, antistatic property, and insulation of heat to the textiles concerned by being used to the textiles, and a cloth with the glitter concerned adhered therein.

There are four relevant documents, 1) JP-61-041600 (OIKE KOGYO KK), 2) JP-A-11-158515 (IZUMI KOGYO KK), 3) JP-A-07-258965 (TOYOBOSEKI KK), 4) JP-A-10-037085 (KK CHUO GIKEN KOGYO). "

JP-61-041600 (OIKE KOGYO KK) " disclosed that it becomes easily to color both surfaces of the metallized film with a water-soluble resin-based colorant by coating with a hydrophilic resin coating in advance.

"JP-A-11-158515 (IZUMI KOGYO KK)" disclosed a method that it becomes easily to produce a bright strips from an extremely thin (a thickness as thin as 20 m or thinner) metal-deposited film.

"JP-A-07-258965 (TOYOBOSEKI KK)" disclosed an art to prevent exposure of the non-metal parts and occurrence of disconnection of the metal parts owing to fiber movement.

"JP-A-10-037085 (KK CHUOGIKEN KOGYO)" disclosed a decorative fabric **characterized in that** a bright powder having a thermally fusible layer is stuck to the fabric surface through the thermally fusible layer

### DESCRIPTION OF THE INVENTION

Namely, a glitter according to the present invention is **characterized in that** antibacterial metal is vapor-deposited on a first synthetic resin film to form a vapor deposition membrane, a synthetic resin is coated on a surface of antibacterial metal of the above-described vapor deposition membrane, or a second synthetic resin film is adhered to a surface of the antibacterial metal of the above-described vapor deposition membrane to form a laminated film, and the above-described laminated film is finely cut. In addition, antibacterial metal is a metal having antibacterial properties in which ion exchange is enabled, such as silver, steel, and zinc.

Moreover, a cloth according to the present invention is **characterized in that** the above-described glitter is adhered to raw yarns.

Thus, a glitter according to the present invention is equipped with antibacterial property by antibacterial metal, insulation of electromagnetic wave, an antistatic property, and aesthetic appreciation property by metallic luster of an antibacterial metal. In addition, since a glitter according to the present invention is a laminated film finely cut that includes vapor deposition membrane made of antibacterial metal, it may easily be adhered to textiles, such as garments, and thereby an insulation property of heat may be easily given to the textiles.

### BRIEF DESCRIPTION OF THE DRAWINGS

Fig. 1 is an appearance view showing an appearance of cloth (nonwoven fabric) according to the present invention;
Fig. 2 is a partial enlargement view of the nonwoven fabric;
Fig. 3 is a view showing a constitution of a glitter according to the present invention;
Fig. 4 is a view illustrating a manufacture of a glitter; and
Fig. 5 is a view illustrating a manufacture of a nonwoven fabric.

### BEST MODE FOR CARRYING OUT THE INVENTION

Hereinafter, embodiments of a glitter and cloth (nonwoven fabric) according to the present invention will be described based on drawings.

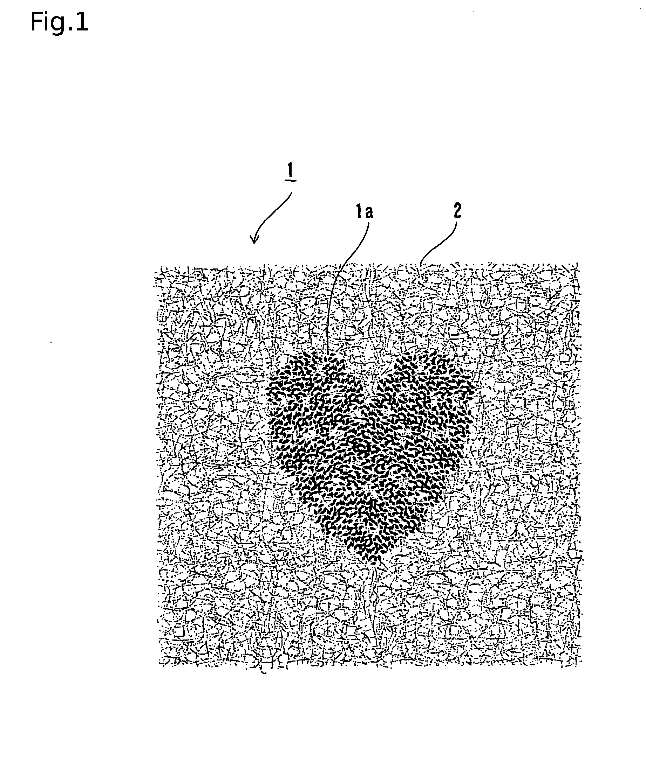

Fig. 1 is a view showing an appearance of a nonwoven fabric 1 according to the present invention, and as is shown in the view, nonwoven fabric 1 constitutes a base fabric 2 made of a nonwoven fabric, and adhesion part 1a to which a glitter 4 mentioned later is adhered is prepared.

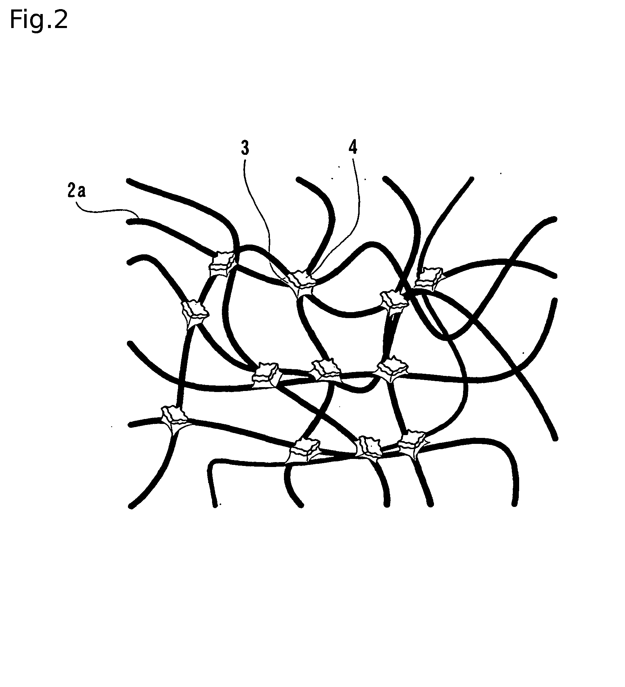

Fig. 2 is a partial enlargement of the adhesion part 1a, and as is shown in the view, the glitter 4 is adhered to a raw yarn 2a constituting the base fabric 2 with an adhesive 3.

The raw yarn 2a may be either of chemical and synthetic fibers, such as acrylic fiber, nylon fiber, polypropylene fiber, rayon, acetate, cupra, and cellulose fiber (not specified), or natural fiber, such as cotton, hemp, silk, and wool yarn, and two or more of them may be used in combination.

Moreover, the adhesive 3 has starch, povals, or transparent thermoplastic resins as main components, and as such thermoplastic resins, resins currently generally used, such as polyester, polyurethane, acrylic may just be used.

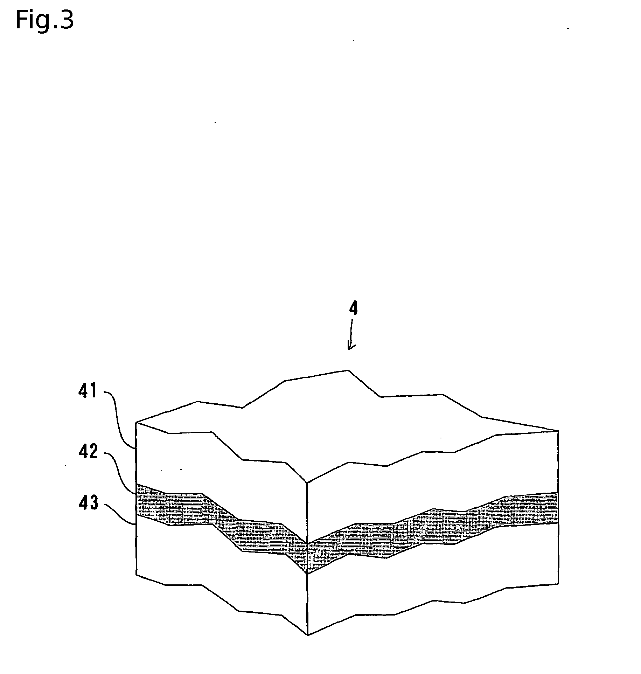

Furthermore, the glitter 4 includes a first synthetic resin film 41, a vapor deposition membrane 42, and a second synthetic resin film 43, as shown in Fig. 3, and is a laminated film with a form of approximately square having a length that the one side of it is about 0.1 mm to about 3 mm. As shown in the view, the four edges are exposed outside and a thickness of a vapor deposition membrane 42 is 25 nm to about 300 nm, and in view of guarantee of function and of cost it is preferable about 50 nm. Here, an antibacterial metal is a metal having antibacterial property in which ion exchange is enabled, such as silver, copper, and zinc, and especially, if a balance of antibacterial property and an aesthetic appreciation property are taken into consideration, use of silver is optimal. Moreover, synthetic resin films 41 and 42 are transparent films with a thickness of about 5 to 100 microns currently made of polyester and nylon.

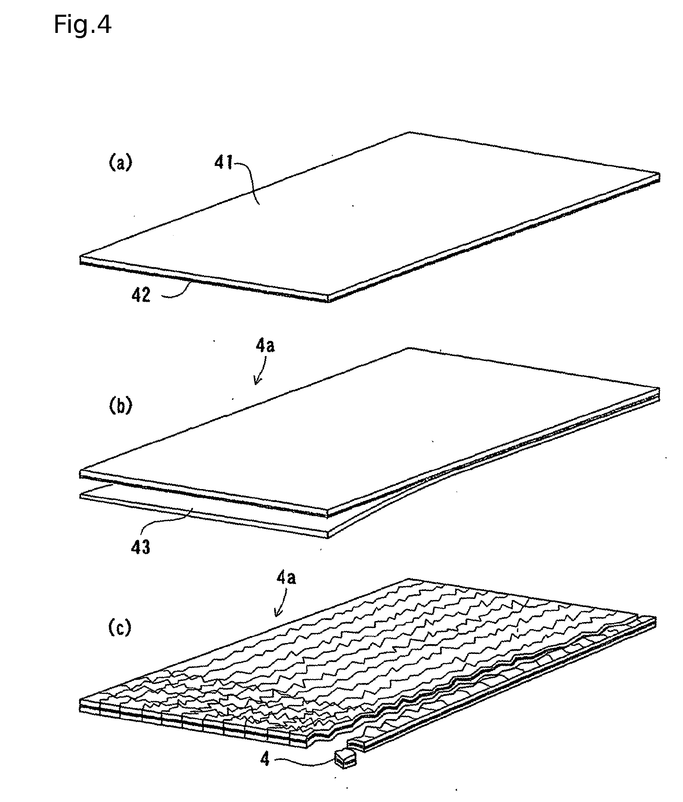

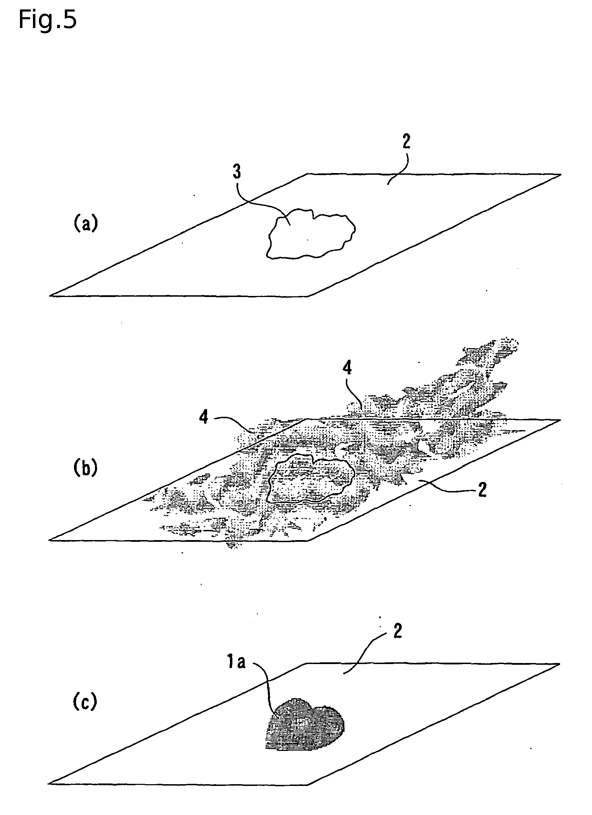

Now, such a nonwoven fabric 1 is manufactured in following steps shown below. (1) Manufacture of a glitter 4, and (2) adhesion of the glitter 4. In addition, a method of manufacture is described based on Figs. 4 and 5.

### (1) Manufacture of a glitter 4

First, antibacterial metal is vapor-deposited on one side of the first synthetic resin film 41 to form a vapor deposition membrane 42 (refer to Fig. 4(a)), the second synthetic resin film 43 is adhered to a metal side of the vapor deposition membrane 42 with adhesive (refer to Fig. 4(b)) to form a laminated film 4a. Next, the laminated film 4a is cut out by shredder in a shape of fine particles (refer to Fig. 4(c)) to manufacture the glitter 4. When cutting, in order to set exposure of the vapor deposition membrane 42 greater, it is in zigzag shape.

### (2) Adhesion of the glitter 4

First, by intaglio printing method, adhesive 3 is applied on a base fabric 2, and a layer of adhesive 3 is formed on the base fabric 2 (refer to Fig. 5 (a)). In addition, a thickness of the adhesive 3 is preferable to be thinner than the first and second synthetic resin films 41 and 43 so that exposure of the four edges of the vapor deposition membrane 42 may not be prevented. Next, the glitter 4 is sprinkled on a base fabric 2, thereby whole surface is covered (refer to Fig. 5 (b)), and the glitter 4 is heated and pressure-fitted by pressure from above. Finally, the glitter 4 which was not adhered is aspirated (refer to Fig. 5 (c)), then the nonwoven fabric 1 is completed.

Thus, since the glitter 4 is adhered to the raw yarns 2a, the nonwoven fabric 1 is equipped with antibacterial property, insulation of electromagnetic wave, antistatic property, and insulation of heat by vapor deposition membrane 42 included in glitter 4, and also with aesthetic appreciation property by metallic luster of antibacterial metal.

In addition, the present invention is not limited to the above-described embodiments and Examples, and various modification is possible within a range of technical matter indicated in Claims.

For example, in the above-described Example, the second synthetic resin film 43 was adhered with adhesives on the vapor deposition membrane 42 formed on the first synthetic resin film 41 to constitute the laminated film 4a, and in addition, the synthetic resin may be coated on the vapor deposition membrane 42 to constitute the laminated film.

Moreover, in the above-described Example, although the glitter 4 is adhered to a surface of the base fabric 2, it may be adhered to an inside thereof depending on a thickness of the base fabric 2.

Furthermore, in the above-described Example, although nonwoven fabric was used as a base fabric, various cloth, such as woven fabric and knit fabric, may be used. In addition, these cloths are used for garments and also for outer material or lining cloth of a chair, an interior design article, futon, a cushion, a pillow, a bed, rag dolls, and dolls. A cloth with the glitter adhered therein may be adhered on concrete walls, ceilings and floors and may be built in for usage as electromagnetic wave removal material.

In addition, although the glitter 4 obtained by finely cutting the laminated film 4a was adhered on the base fabric 2 in the above-described Example, the glitter 4 may be put in a cloth bag to be used as purification material for bathtubs and flower vases and moreover may be directly applied to wall materials. And it may be equally mixed or adhered with cottons that synthetic resins, such as polyester, are the principal components which are well used as bulking materials and cushioning materials for a chair, an interior design article, futon, a cushion, a pillow, a bed, rag dolls, and dolls.

### INDUSTRIAL APPLICABILITY

Since a glitter according to the present invention constitutes a laminated film including antibacterial metal, it is equipped with antibacterial property by antibacterial metal, insulation of electromagnetic wave, antistatic property, and aesthetic appreciation property by metallic luster of antibacterial metal. Moreover, the glitter may be easily adhered to textiles, such as garments, and may give insulation of heat easily to the textiles. Furthermore, since such glitter is adhered to raw yarn, a cloth according to the present invention is also equipped with characteristics, such as antibacterial property.

## Claims

1. A glitter (4) **characterized in that** a metal which is chosen from silver, copper and zinc is vapor-deposited on a first synthetic resin film (41) to form a vapor deposition membrane (42) , a synthetic resin is coated on a surface of the metal of the vapor deposition membrane (42), or a second synthetic resin film (43) is adhered to a surface of the metal of said vapor deposition membrane (42) to form a laminated film (4a), and the laminated film (4a) is finely cut in zigzag shape in order to set exposure of the vapor deposition membrane (42) greater.

2. A cloth (1) **characterized in that** the glitter (4) according to Claim 1 is adhered to raw yarns (2a).

## Patentansprüche

1. Glitzerndes Material(4), **dadurch gekennzeichnet, dass** ein Metall der aus Silber, Kupfer und Zink bestehenden Gruppe zur Bildung einer Bedampfungsmembran(42) auf einen ersten Kunstharzfilm(41) aufgedampft ist; dass eine Oberfläche des Metalls der Bedampfungsmembran(42) mit einem Kunstharz beschichtet ist, oder ein zweiter Kunstharzfilm(43) zur Bildung eines laminierten Films(4a) an einer Oberfläche des Metalls der genannten Bedampfungsmembran(42) adhäsiv angebracht ist; und dass der laminierte Film(4a) schließlich zwecks vergrößerter Exposition der Bedampfungsmembran(42) in Zickzackform geschnitten ist.

2. Kleidungsstück(1), **dadurch gekennzeichnet, dass** das glitzernde Material(4) gemäß Anspruch 1 auf Rohgarne(2a) geklebt ist.

## Revendications

1. Clinquant (4) **caractérisé en ce qu'**un métal qui est choisi parmi l'argent, le cuivre et le zinc est déposé en phase vapeur sur un premier film (41) en résine synthétique pour former une membrane (42) de dépôt en phase vapeur, une résine synthétique est appliquée en revêtement sur une surface du métal de la membrane (42) de dépôt en phase vapeur ou un deuxième film (43) en résine synthétique est collé à une surface du métal de la membrane (42) de dépôt en phase vapeur pour former un film (4a) stratifié et le film (4a) stratifié est découpé finement sous une forme en zigzag afin d'exposer davantage la membrane (42) de dépôt en phase vapeur.

2. Vêtement (1) **caractérisé en ce que** le clinquant (4) suivant la revendication 1, est collé à des fils (2a) écrus.
